# EUROPÄISCHE PATENTSCHRIFT

(11) **EP 3 815 856 B1**
(45) Veröffentlichungstag und Bekanntmachung des Hinweises auf die Patenterteilung: **15.01.2025**
(21) Anmeldenummer: 19405018.3
(22) Anmeldetag: 04.11.2019
(51) Int. Cl.: B25J 9/16, B01L 1/02, B25J 19/02, B25J 21/02, G06F 3/01

(54) **VERFAHREN ZUR ÜBERWACHUNG VON ZUSTAND UND BEWEGUNGSABLAUF IN EINER ASEPTISCHEN ARBEITSKAMMER EINES CONTAINMENTS**
PROCESS FOR MONITORING STATE AND MOVEMENT IN AN ASEPTIC WORKING CHAMBER OF A CONTAINER
PROCÉDÉ DE SURVEILLANCE DE L'ÉTAT ET DE DÉROULEMENT DU MOUVEMENT DANS UNE CHAMBRE DE TRAVAIL ASEPTIQUE D'UN CONTENEUR

(43) Veröffentlichungstag der Anmeldung: 05.05.2021
(73) Patentinhaber: SKAN AG, 4123 Allschwil (CH)
(72) Erfinder: Geiser, Christoph Joschi, CH-4313 Möhlin (CH); Lehmann, Frank Martin, CH-4102 Binningen (CH)
(74) Vertreter: Ullrich, Gerhard

(56) Entgegenhaltungen:
- WO-A1-2019/173678
- DE-A1- 102012 007 242
- US-A9- 2016 376 044
- JORGE USABIAGA ET AL: "Global hand pose estimation by multiple camera ellipse tracking", MACHINE VISION AND APPLICATIONS, SPRINGER, BERLIN, DE, vol. 21, no. 1, 24 May 2008 (2008-05-24), pages 1 - 15, XP019755536, ISSN: 1432-1769

## Beschreibung

### Anwendungsgebiet der Erfindung

Die vorliegende Erfindung betrifft ein Verfahren zur Überwachung von Zustand und Bewegungsablauf in einer aseptischen Arbeitskammer eines in einem Aufstellraum stehenden Containments, mit zumindest einem in die Arbeitskammer hineinragenden Arbeitshandschuh, den ein Bediener trägt. Der jeweilige Arbeitshandschuh ist in der Arbeitskammer bis zu einem maximalen Greifbereich in den drei xyz-Raumachsen erstreckbar. Jeder Arbeitshandschuh könnte jeweils ein Objekt oder zwei Arbeitshandschuhe zusammen könnten ein Objekt halten, wodurch sich ein maximal erweiterter Aktionsbereich in den drei xyz-Raumachsen ergibt. In der Arbeitskammer können sich temporär Behältnisse befinden, die mit Substanzen gefüllt sind, mit solchen zu befüllen oder zu entleeren sind.

### Stand der Technik

Von der Metall+Plastik GmbH, D-78315 Radolfzell/Deutschland, ist die Verwendung von Kameras zum Filmen der Innenräume von Isolatoren zur Überwachung des Geschehens aus verschiedenen Richtungen bekannt. Auch die Firma Nuaire, Plymouth, MN 55447/USA, verwendet Kameras zur kontinuierlichen Aufzeichnung im Isolator (siehe https://www.nuaire.com/learn/general-technicalbulletins/camera-useage-in-a-biosafety-cabinet-pharmacy-isolator; Internetauszug vom 30.09.2019).

Die Ortner Reinraumtechnik GmbH, A-9500 Villach/Österreich, setzt für den gleichen Zweck eine Gegensprechanlage mit Überwachungskamera ein (siehe https://www.ortner-group.com/produkte/isoline/aseptic-isolator.15f08.php; Internetauszug vom 30.09.2019).

Von der Bausch+Ströbel Maschinenfabrik IIshofen GmbH+Co. KG, D-74532 IIshofen/Deutschland, ist die Verwendung von Kameras für eine kontinuierliche Aufzeichnung von Abfüllprozessen in Isolatoren bekannt (siehe ISPE November 2018 "Remote Observation Technologies - Revolutionizing the Pharma Manufacturing Space", unter https://ispe.org/pharmaceutical-engineering/novemberdecember-2018/remote-observation-technologies-revolutionizing; Internetauszug vom 30.09.2019).

Der Zeitschriftenartikel von Jorge Usabiaga et al.: Global hand pose estimation by multiple camera ellipse tracking. in: Machine Vision and Applications, Springer Verlag Berlin, Bd. 21, Nr. 1 vom 24.05.2008, S. 1-15, offenbart ein System zur Überwachung von Zustand und Bewegungsablauf in einer aseptischen Arbeitskammer eines in einem Aufstellraum stehenden Containments, mit zumindest einem in die Arbeitskammer hineinragenden Arbeitshandschuh. Der jeweilige Arbeitshandschuh ist in der Arbeitskammer bis zu einem maximalen Greifbereich in den drei Raumachsen erstreckbar. Das System umfasst ein Tracking-System, deren Aufzeichnungen zur kontinuierlichen dreidimensionalen Lokalisierung des zumindest einen Arbeitshandschuhs dienen und in einer Rechnereinheit abgespeichert sind.

Die WO 2019/173 678 A1 beschreibt ein System, bei dem von einem Bediener mit seiner von einem Arbeitshandschuh geschützten Hand in einen Raum eingegriffen wird. Die Handschuhoberfläche ist mit einem Feld von Dehnungssensoren bestückt, das komplementär zu den einzelnen Hand- und Fingergelenken angeordnet ist. Mit einer Kamera werden in Echtzeit die Positionen der Dehnungssensoren und damit der Hand- und Fingergelenke erfasst. In einer Rechnereinheit sind durch ihre 3D-Koordinaten definierte Sperrbereiche innerhalb des zu überwachenden Raums abgespeichert. Beim Vordringen in die Sperrbereiche mit dem Handschuh, z.B. in gefährliche Zonen, wird durch Vergleich zwischen den momentanen Positionen der Dehnungssensoren und der in der Rechnereinheit definierten Sperrbereiche gewarnt.

### Aufgabe der Erfindung

Ausgehend vom vorbekannten Stand der Technik liegt der Erfindung die Aufgabe zugrunde, ein weiterentwickeltes Verfahren zur Überwachung von Zustand und Bewegungsablauf in einer aseptischen Arbeitskammer eines Containments zu schaffen. Ziel ist es, damit eine sichere Führung für die Handlungen des Bedieners am Containment zu gewährleisten, dennoch fehlerhafte Aktivitäten des Bedieners und Havariefälle rasch zu erkennen und daraus entstandene Verluste zu minimieren.

### Übersicht über die Erfindung

Das Verfahren ist zur Überwachung von Zustand und Bewegungsablauf in einer aseptischen Arbeitskammer eines in einem Aufstellraum stehenden Containments konzipiert. Vorgesehen ist zumindest ein in die Arbeitskammer hineinragender Arbeitshandschuh, den ein Bediener trägt, wobei:
a) der jeweilige Arbeitshandschuh in der Arbeitskammer bis zu einem maximalen Greifbereich in den drei Raumachsen erstreckbar ist; und
b) ein Tracking-System installiert ist, deren Aufzeichnungen zur kontinuierlichen dreidimensionalen Lokalisierung des zumindest einen Arbeitshandschuhs dienen und in einer Rechnereinheit abgespeichert werden. Kennzeichnend sind folgende Schritte:
   - Definition zumindest eines dreidimensionalen oder zweidimensionalen Sperrbereichs in der Arbeitskammer;
   - zumindest einzelne Flächenabschnitte des Containments werden als Sperrbereich definiert;
   - um Maschinen herum, die in der Arbeitskammer installiert sind und für den Bediener eine Gefahr darstellen, wird ein Sperrbereich eingerichtet;
   - die Koordinaten des zumindest einen Sperrbereichs werden in der Rechnereinheit abgespeichert; und
   - bei Vordringen mit dem zumindest einen Arbeitshandschuh in den zumindest einen Sperrbereich wird der Bediener alarmiert.

Nachfolgend werden spezielle Ausführungsformen der Erfindung angegeben:
Zu dem zumindest einen dreidimensionalen oder zweidimensionalen definierten Sperrbereich wird ein daran angrenzender Warnbereich definiert. Hierbei umfasst der zumindest eine Flächenabschnitt den gesamten Boden des Containments als Sperrbereich. Herum um die in der Arbeitskammer installierten und für den Bediener eine Gefahr darstellenden Maschinen, wird vor dem Sperrbereich ein Warnbereich eingerichtet. Die Koordinaten von Sperrbereich und Warnbereich werden in der Rechnereinheit abgespeichert. Bei Vordringen mit dem zumindest einen Arbeitshandschuh in den Warnbereich wird der Bediener alarmiert.

Jeder Arbeitshandschuh hält jeweils ein Objekt oder zwei Arbeitshandschuhe halten zusammen ein Objekt, wodurch sich ein maximal erweiterter Aktionsbereich in den drei Raumachsen ergibt. Vom Tracking-Systems werden sowohl die kontinuierliche dreidimensionale Lokalisierung des zumindest einen Arbeitshandschuhs als auch des zumindest einen Objekts aufgezeichnet. Beim Vordringen eines Objekts in den Warnbereich oder den Sperrbereich wird der Bediener alarmiert.

In der Rechnereinheit werden die räumlichen momentanen Positionen von Arbeitshandschuhen und Objekten innerhalb des mit den drei Raumachsen gebildeten xyz-Koordinatensystems mit Zeitstempel erfasst. In der Rechnereinheit erfolgt ein Echtzeitvergleich mit den in der Rechnereinheit festgelegten Sperrbereichen und optionalen Warnbereichen.

In der Arbeitskammer können sich temporär Behältnisse befinden, die mit Substanzen gefüllt sind, mit solchen zu befüllen oder zu entleeren sind. Dann werden in der Rechnereinheit die räumlichen Positionen der Behältnisse innerhalb des mit den drei Raumachsen gebildeten xyz-Koordinatensystems mit Zeitstempel erfasst, um bei einem Havariefall eine nichtplanmässige Position eines Behältnisses, einen eventuellen Bruch eines Behältnisses mit dessen Ausbreitungsbereich und den Bereich unkontrolliert austretender Substanz festzustellen.

Der Bediener kann mit einer Virtual-Reality-Brille ausgestattet werden, welche dazu bestimmt ist:
- ihm die in der Rechnereinheit definierten Sperrbereiche und optionalen Warnbereiche als Grafikelemente anzuzeigen; und
- ihm eine gemäss dem in der Rechnereinheit hinterlegten Reinigungs- und Desinfektionsprogramm zu reinigende Fläche anzuzeigen.

Das Tracking-System zumindest umfasst:
a) eine erste Kamera, die einen ersten Erfassungswinkel hat; und
b) eine zweite Kamera, die einen zweiten Erfassungswinkel hat; wobei:
   - die erste Kamera mit ihrem ersten Erfassungswinkel zwei Raumachsen und die zweite Kamera mit ihrem zweiten Erfassungswinkel die dritte Raumachse überwachend erfassen;
   - sich der erste Erfassungswinkel und der zweite Erfassungswinkel überlappen, so dass alle Bereiche in der Arbeitskammer von der Überwachung erfasst werden; und
   - die erfassten Zustände und Bewegungsabläufe in der Rechnereinheit als 3D-Daten und/oder Videostreams abgespeichert werden.

Bei grosser räumlicher Ausdehnung der Arbeitskammer werden eine dritte Kamera mit ihrem dritten Erfassungswinkel und in Abhängigkeit von der Grösse der Arbeitskammer weitere Kameras mit den jeweiligen Erfassungswinkeln installiert; wobei:
- die erste Kamera mit ihrem ersten Erfassungswinkel die erste Raumachse, die zweite Kamera mit ihrem zweiten Erfassungswinkel die zweite Raumachse und die dritte Kamera mit ihrem dritten Erfassungswinkel die dritte Raumachse überwachend erfassen;
- sich die Erfassungswinkel so überlappen, dass alle Bereiche in der Arbeitskammer von der Überwachung erfasst werden; und
- die erfassten Zustände und Bewegungsabläufe in der Rechnereinheit als 3D-Daten und/oder Videostreams abgespeichert werden.

Eine Signaleinheit wird vorgesehen, welche einen in die Arbeitskammer eingreifenden Bediener und/oder eine Überwachungsperson:
a) bei unzulässigem Vordringen in einen Sperrbereich akustisch und/oder optisch und/oder durch auf den Körper des Bedieners und/oder der Überwachungsperson einwirkende Vibration alarmiert; sowie
b) bei eingerichteten Warnbereichen bei kritischem Vordringen in einen Warnbereich als Annäherung an einen Sperrbereich akustisch und/oder optisch und/oder durch auf den Körper des Bedieners und/oder der Überwachungsperson einwirkende Vibration alarmiert.

In der Rechnereinheit können weitere Vorschriften definiert werden, nämlich:
a) zum Eingriff in die Arbeitskammer autorisierte Bediener;
b) in der Arbeitskammer erlaubte Objekte, z.B. Werkzeuge, und erlaubte, passfähige Bauteile, z.B. Formteile an Füllmaschinen, und der vorschriftsgemässe Einbau solcher Formteile hinsichtlich anlagen-technischer Zuordnung und Positionierung;
c) maximal zulässige Geschwindigkeit der in der Arbeitskammer bewegten Arbeitshandschuhe bzw. Objekte; und
d) ein Reinigungs- und Desinfektionsprogramm.

Das Tracking-System wird zusätzlich zwecks Erkennung der biometrischen Kennzeichen eines am Containment sich positionierten Bedieners ausgestattet.

Von der Virtual-Reality-Brille wird dem Bediener gemäss dem in der Rechnereinheit hinterlegten Reinigungs- und Desinfektionsprogramm die vorgeschriebene Intensität bei der Flächenreinigung, z.B. als ein- oder mehrmaliges mit einem Mindestanpressdruck auszuführendes Überwischen, und deren Erfüllung angezeigt, z.B. als Farbumschlag bei erreichter Erfüllung von Rot auf Grün.

Der zumindest eine Arbeitshandschuh wird mit systematisch verteilten Markierungspunkten versehen, und anhand genannter Markierungspunkte wird der vom Arbeitshandschuh gebildete Volumenkörper als CAD-Drahtmodell durch das Tracking-System erfasst.

Das vom zumindest einen Arbeitshandschuh gehaltene Objekt wird mit systematisch verteilten Markierungspunkten versehen, und anhand genannter Markierungspunkte wird der vom Objekt gebildete Volumenkörper als CAD-Drahtmodell durch das Tracking-System erfasst.

### Kurzbeschreibung der beigefügten Zeichnungen

Es zeigen:

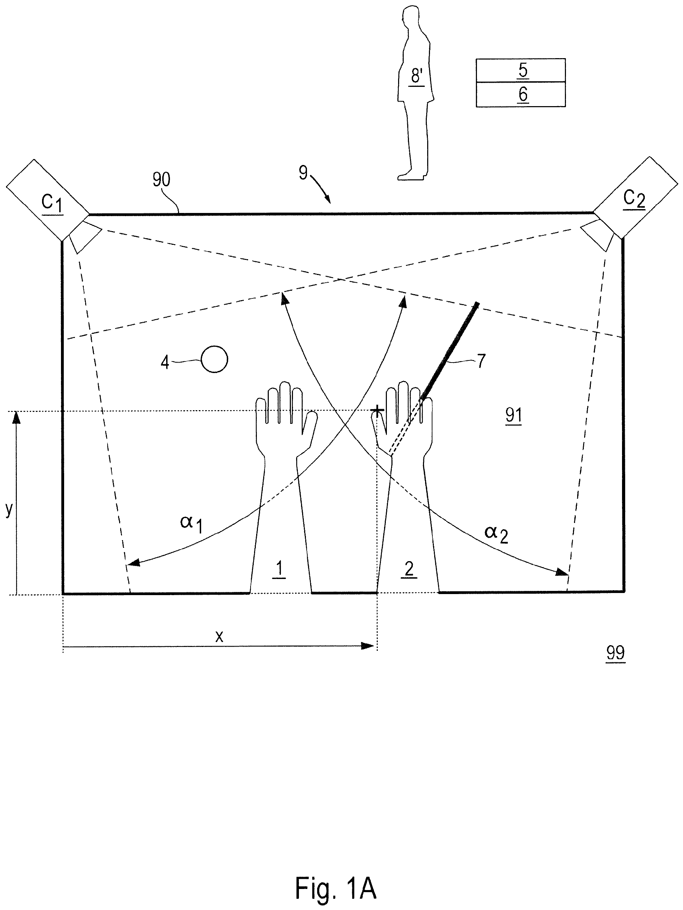

- Figur 1A -: die Arbeitskammer eines Containments mit zwei hineinragenden Arbeitshandschuhen, einem gehaltenen Objekt in Gestalt eines Werkzeugs und zwei Kameras, in Draufsicht;

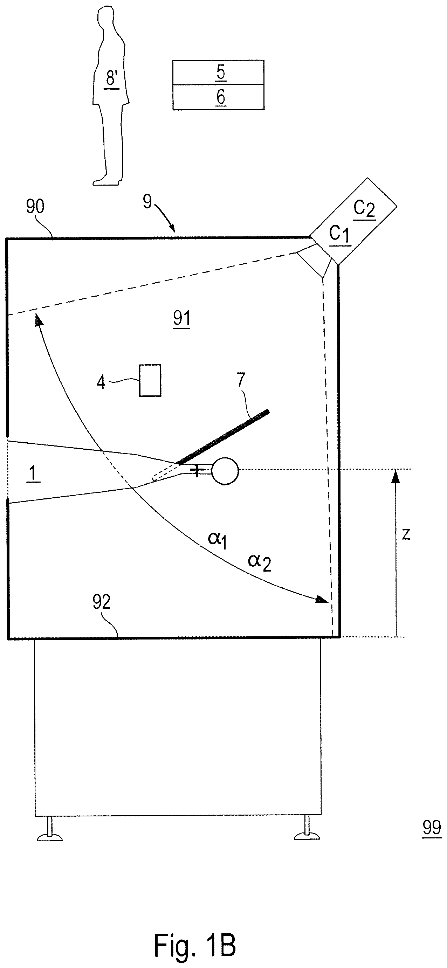

- Figur 1B -: den Aufbau gemäss Figur 1A, in Seitenansicht;

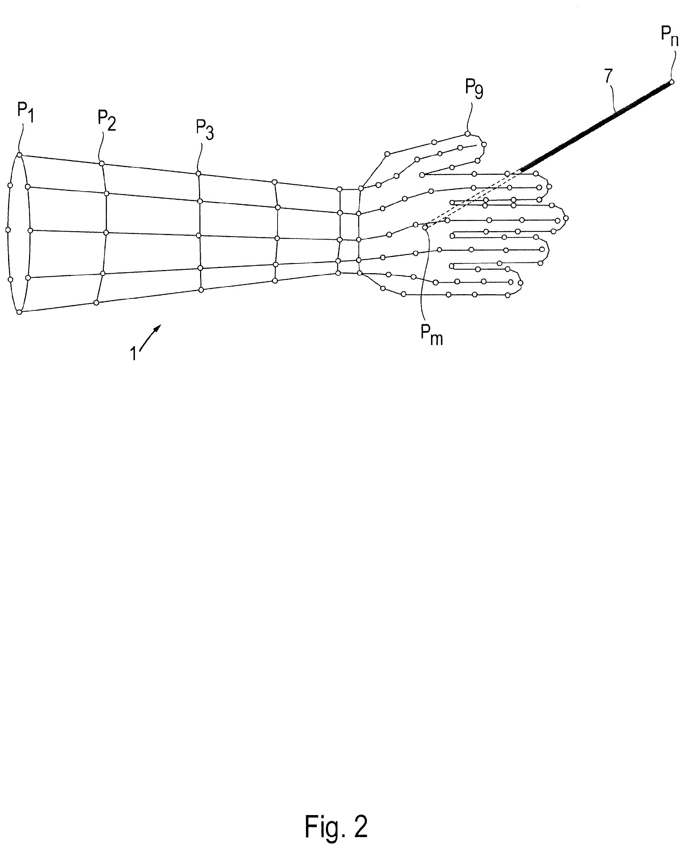

- Figur 2 -: einen Arbeitshandschuh mit Werkzeug mit einer Vielzahl systematischer Markierungspunkte zur Erstellung eines CAD-Drahtmodels;
- Figur 3A -: den Aufbau gemäss Figur 1A, mit drei Kameras und dem ersten Arbeitshandschuh mit einer Streckvorrichtung, in Draufsicht;
- Figur 3B -: den Aufbau gemäss Figur 3A, mit einem vor dem Containment stehenden Benutzer, in Seitenansicht;

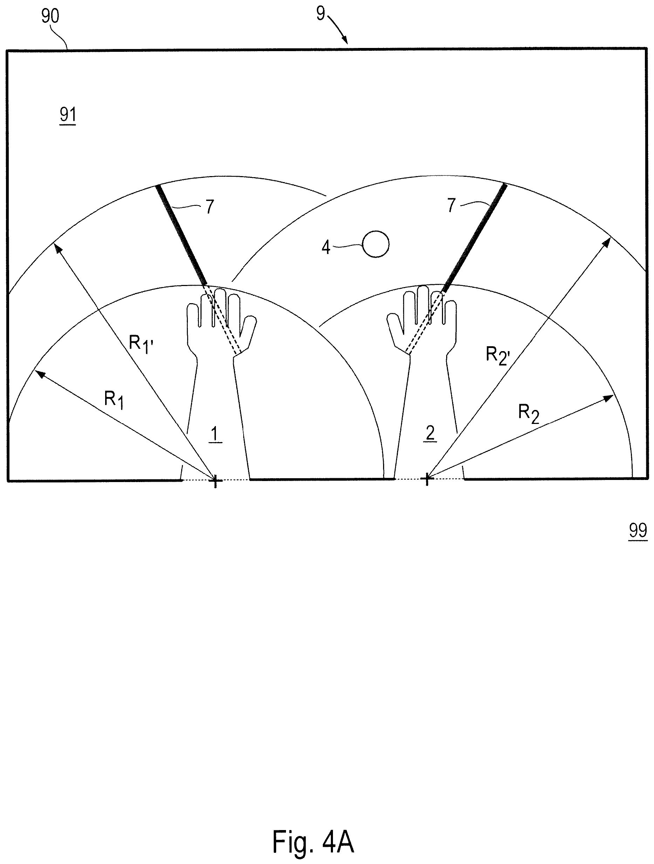

- Figur 4A -: den Aufbau gemäss Figur 1A, jeder Arbeitshandschuh mit Werkzeug, zur prinzipiellen Illustration der Greif- und Aktionsbereiche, in Draufsicht;

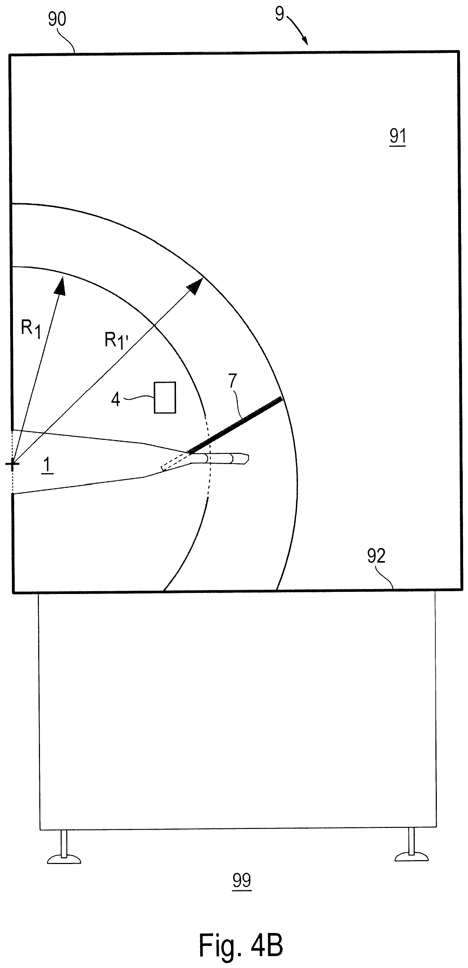

- Figur 4B -: den Aufbau gemäss Figur 4A, in Seitenansicht;

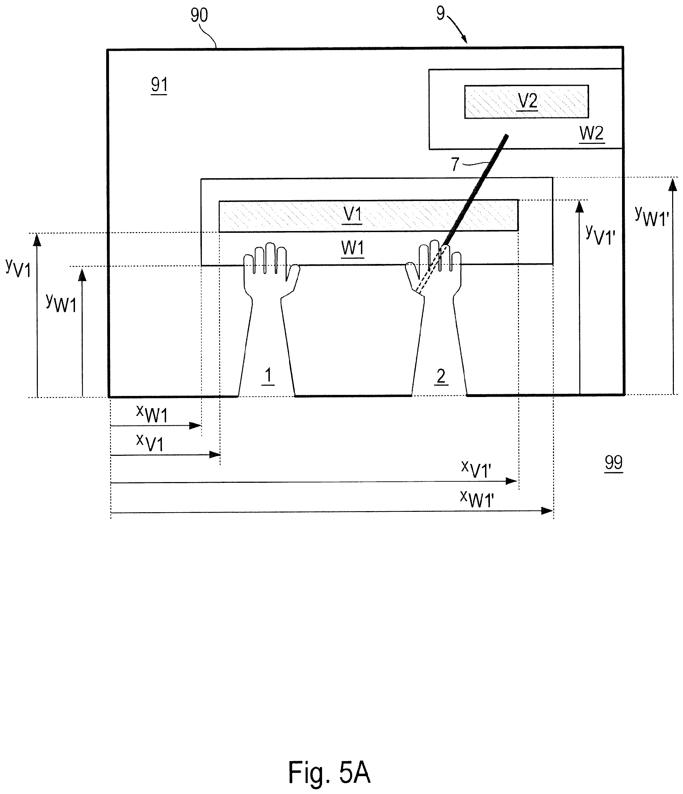

- Figur 5A -: den Aufbau gemäss Figur 1A, der zweite Arbeitshandschuh mit Werkzeug zur prinzipiellen Illustration von Warn- und Verbotsbereichen, in Draufsicht;

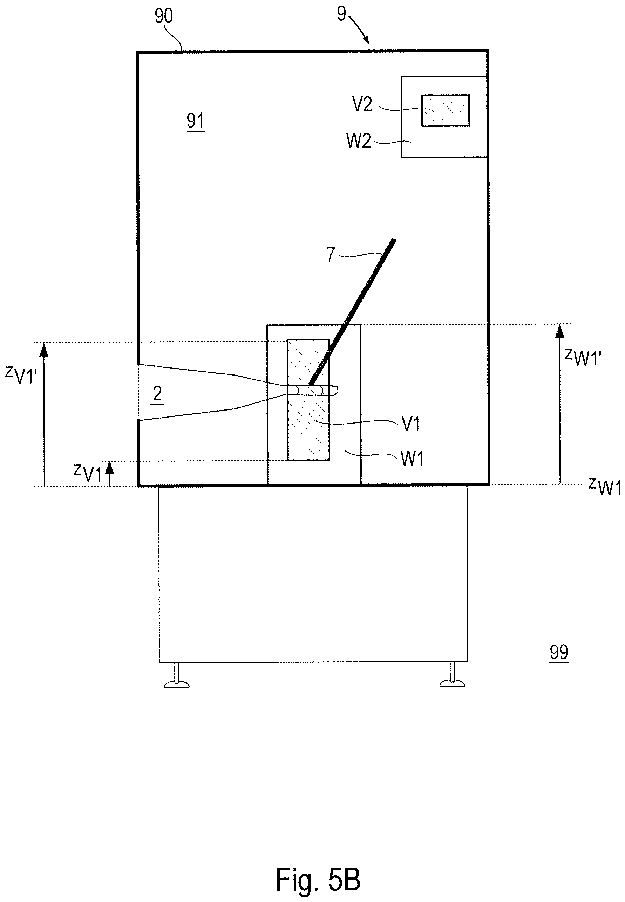

- Figur 5B -: den Aufbau gemäss Figur 5A, in Seitenansicht;

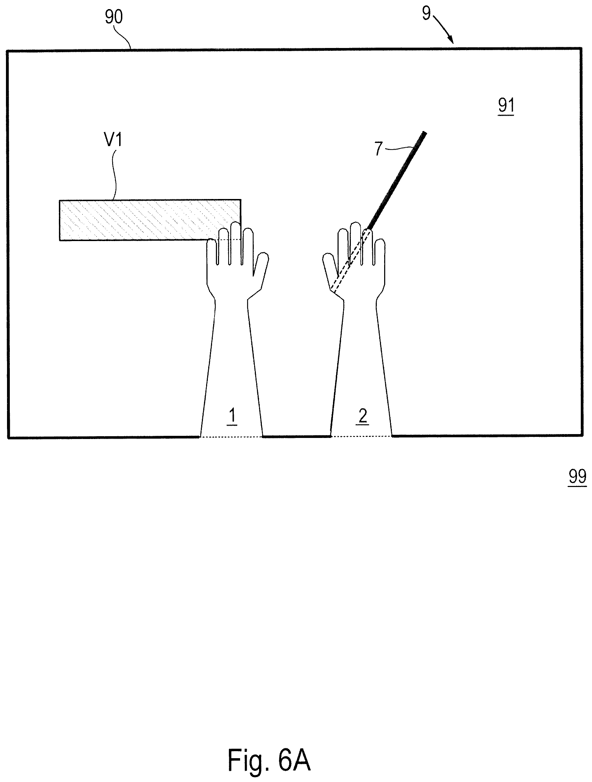

- Figur 6A -: den Aufbau gemäss Figur 5A, zur prinzipiellen Illustration mit dem ersten Arbeitshandschuh im Eingriff in den ersten Verbotsbereich, in Draufsicht; und

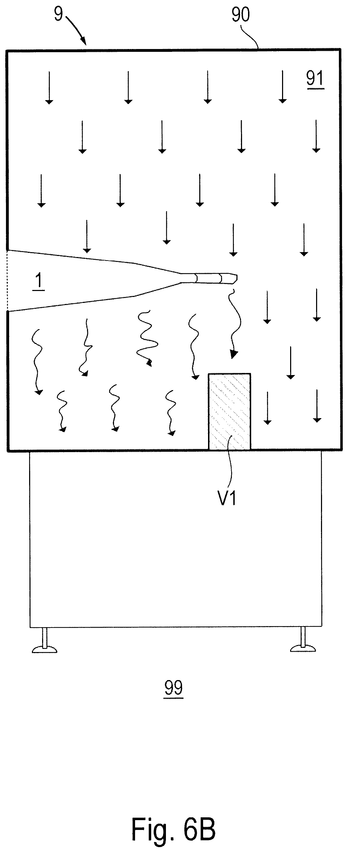

- Figur 6B -: den Aufbau gemäss Figur 6A, zur prinzipiellen Illustration gestörter Laminarströmung, in Seitenansicht.

### Ausführungsbeispiel

Mit Bezug auf die beiliegenden Zeichnungen erfolgt nachstehend die detaillierte Beschreibung des erfindungsgemässen Verfahrens zur Überwachung von Zustand und Bewegungsablauf in einer aseptischen Arbeitskammer eines Containments.

Für die gesamte weitere Beschreibung gilt folgende Festlegung. Sind in einer Figur zum Zweck zeichnerischer Eindeutigkeit Bezugsziffern enthalten und dabei zeichnerisch eindeutig erkennbar ist, dass es sich um "wiederkehrende" Bauteile handelt, aber im unmittelbar zugehörigen Beschreibungstext nicht erläutert, so sei im Interesse der Verkürzung, auf deren Erklärung in vorangehenden Figurenbeschreibungen hingewiesen.

### Figuren 1A und 1B

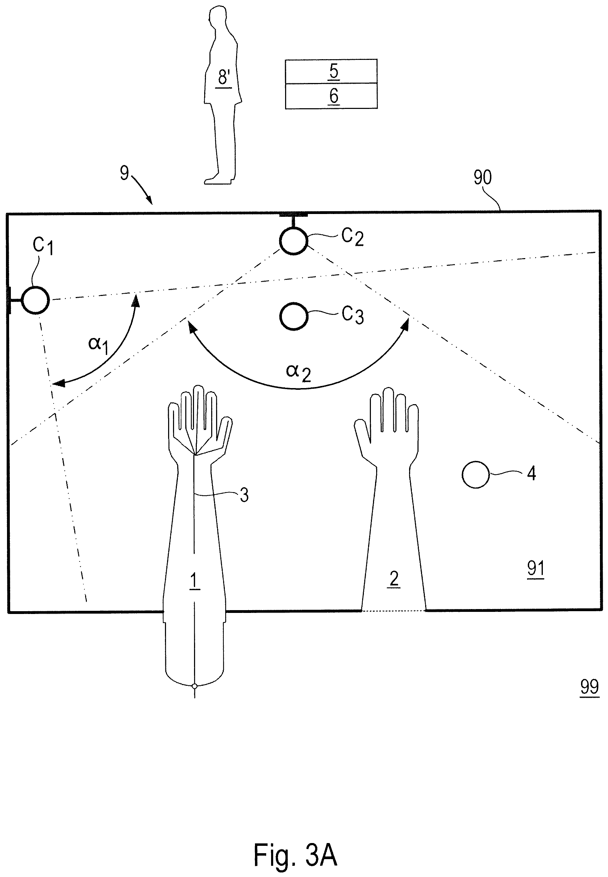

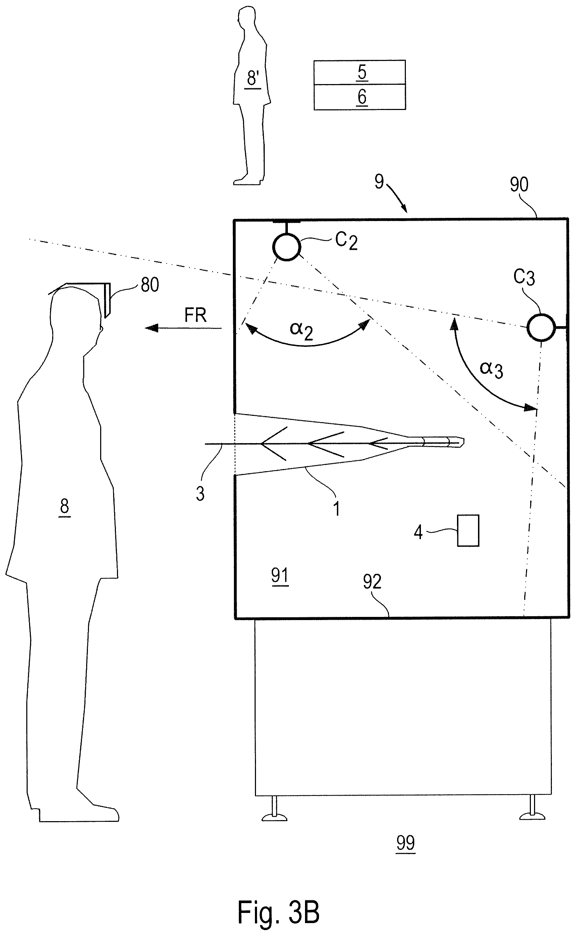

Das in einem Aufstellraum **99** positionierte Containment **9** ist vom Gehäuse **90** umgeben, welches die Arbeitskammer **91** umschliesst. In die Arbeitskammer **91** ragen - wie im gestreckten Zustand gezeigt - ein erster Arbeitshandschuh **1** und ein zweiter Arbeitshandschuh **2** hinein. Diese Arbeitshandschuhe **1,2** sind zum Eingriff eines berechtigten Bedieners **8** bestimmt (siehe Figur 3B). Zur Bildung eines Tracking-Systems **C1-C2** sind eine erste Kamera **C1,** die einen ersten Erfassungswinkel **α1** hat, und eine zweite Kamera **C2** mit ihrem zweiten Erfassungswinkel **α2** vorgesehen. Die erste Kamera **C1** erfasst überwachend die zwei Raumachsen **x,y** und die zweite Kamera **C2** die dritte Raumachse **z,** wobei sich der erste Erfassungswinkel **α1** und der zweite Erfassungswinkel **α2** überlappen, so dass alle Bereiche in der Arbeitskammer **91** von der Überwachung erfasst sind. Die erfassten Zustände und Bewegungsabläufe sind in der Rechnereinheit **5** als 3D-Daten und/oder Videostreams abgespeichert.

Ein Tracking-Systems **C1-C2** kann anstelle von Kameras **C1,C2** von einer Apparatur gebildet werden, die basierend auf optischen Systemen, Laser-, Radar-, Ultraschall- oder Infrarottechnik arbeitet.

Jeder Arbeitshandschuh **1,2** kann jeweils ein Objekt **7** halten oder zwei Arbeitshandschuhe **1,2** zusammen halten ein Objekt **7,** z.B. ein Werkzeug. In der Arbeitskammer **91** können sich temporär Behältnisse **4** befinden, die mit Substanzen gefüllt sind, mit solchen zu befüllen oder zu entleeren sind. Ausserhalb des Containments **9** sind die Rechnereinheit **5** sowie die Signaleinheit **6** vorgesehen und eine Überwachungsperson **8'** kann zugeordnet sein. Die Überwachungsperson **8'** wird bei Erfordernis in den Prozessablauf am Containment **9** eingreifen.

Die Aufzeichnungen des Tracking-Systems **C1-C2** in der Rechnereinheit **5** dienen sowohl zur kontinuierlichen dreidimensionalen Lokalisierung der Arbeitshandschuhe **1,2** als auch der mit diesen geführten Objekte **7** in den von den drei Raumachsen **x,y,z** gebildeten xyz-Koordinatensystems mit Zeitstempel.

In der Rechnereinheit **5** werden auch die räumlichen Positionen der Behältnisse **4** innerhalb des mit den drei Raumachsen **x,y,z** gebildeten xyz-Koordinatensystems mit Zeitstempel erfasst, um bei einem Havariefall eine nichtplanmässige Position eines Behältnisses **4,** einen eventuellen Bruch eines Behältnisses **4** mit dessen Ausbreitungsbereich und den Ausbreitungsbereich unkontrolliert austretender Substanz festzustellen. Solche ernsthaften Havariefälle sind z.B. zu Splittern gebrochene Kunststoff- oder Glasbehälter sowie verschüttete Flüssigkeits- oder Pulversubstanzen.

### Figur 2

Der Arbeitshandschuh **1** ist mit einer Vielzahl systematisch verteilter Markierungspunkte **P1-P9** versehen. Anhand genannter Markierungspunkte **P1-P9** wird der vom Arbeitshandschuh **1** gebildete Volumenkörper als CAD-Drahtmodell durch das Tracking-System **C1-C2** erfasst. Mit dem Arbeitshandschuh **1** kann ein Objekt **7** geführt werden, welches ebenfalls Markierungspunkte **Pm-Pn** zur Positionserfassung mittels des Tracking-Systems **C1-C2** aufweist.

### Figuren 3A und 3B

Bei grosser räumlicher Ausdehnung der Arbeitskammer **91** ist eine dritte Kamera **C3** mit ihrem dritten Erfassungswinkel **α3** installiert. Die erste Kamera **C1** mit ihrem ersten Erfassungswinkel **α1** erfasst überwachend die erste Raumachse **x,** die zweite Kamera **C2** mit ihrem zweiten Erfassungswinkel **α2** die zweite Raumachse **y** und die dritte Kamera **C3** mit ihrem dritten Erfassungswinkel **α3** die dritte Raumachse **z.** In Abhängigkeit von der Grösse der Arbeitskammer **91** können weitere Kameras **C** mit den jeweiligen Erfassungswinkeln **α** zweckmässig sein. Auch hierbei ist es sinnvoll, dass sich die Erfassungswinkel **α1-an** überlappen, um alle Bereiche in der Arbeitskammer **91** von der Überwachung zu erfassen.

In der Rechnereinheit **5** lassen sich Vorschriften definieren, nämlich:
- zum Eingriff in die Arbeitskammer **91** autorisierte Bediener **8;**
- in der Arbeitskammer **91** erlaubte Objekte **7,** z.B. Werkzeuge, und erlaubte, passfähige Bauteile, z.B. Formteile an Füllmaschinen, und der vorschriftsgemässe Einbau solcher Formteile hinsichtlich anlagen-technischer Zuordnung und Positionierung;
- maximal zulässige Geschwindigkeit der in der Arbeitskammer **91** bewegten Arbeitshandschuhe **1,2** bzw. Objekte 7; und
- ein Reinigungs- und Desinfektionsprogramm.

Das Tracking-System **C1-C3** lässt sich zusätzlich zur Gesichtserkennung **FR** mit Erfassung der biometrischen Kennzeichen eines am Containment **9** sich positionierten Bedieners **8** ausstatten, um die Personalie des Bedieners **8** zu protokollieren und/oder seine Autorisation für den Zugriff in die Arbeitshandschuhe **1,2** festzustellen und erst bei Bejahung freizugeben, wie in den beiden europäischen Patentanmeldung Nrn. 19 405 011.8 und 19 405 012.6 vergegenständlicht.

Bei einer vorzunehmenden Dekontamination der Arbeitskammer **91** ist auch sicherzustellen, dass die Arbeitshandschuhe **1,2** mit ihren teils engen Arealen, insbesondere zwischen den Fingern, vollständig dekontaminiert werden, was im eingestülpten, schlapp hängenden Zustand nicht gewährleistet sein könnte. Zwecks gänzlicher Ausdehnung der Arbeitshandschuhe **1,2** ist es Praxis, für die Dekontaminationsphase eine Streckvorrichtungen **3** in den jeweiligen Arbeitshandschuh **1,2** einzuschieben.

Vorteilhaft ist der Bediener **8** mit einer Virtual-Reality-Brille **80** ausgestattet, welche unter anderem dazu bestimmt sein kann, dem Bediener **8** gemäss dem in der Rechnereinheit **5** hinterlegten Reinigungs- und Desinfektionsprogramm die vorgeschriebene Intensität bei der Flächenreinigung, z.B. als ein- oder mehrmaliges mit einem Mindestanpressdruck auszuführendes Überwischen, und deren ordnungsgemässe Erfüllung anzuzeigen, z.B. als Farbumschlag bei erreichter Erfüllung von Rot auf Grün.

### Figuren 4A und 4B

Der jeweils in die Arbeitskammer **91** hineinragende Arbeitshandschuh **1,2** ist bis zu einem maximalen Greifbereich **R1,R2** in den drei Raumachsen **x,y,z** erstreckbar. Werden von den Arbeitshandschuhen **1,2** Objekte **7** gehalten, ergibt sich ein maximal erweiterter Aktionsbereich **R1',R2'** in den drei Raumachsen **x,y,z.**

### Figuren 5A bis 6B

In der Arbeitskammer **91** ist zumindest ein dreidimensionaler oder zweidimensionaler Sperrbereich **V1,V2** definiert, an den ein Warnbereich **W1,W2** angrenzen kann. Einzelne Flächenabschnitte oder der gesamte Boden **92** des Containments **9** können als Sperrbereich **V1,V2** definiert sein. Um Maschinen herum, die in der Arbeitskammer **91** installiert sind und für den Bediener **8** eine Gefahr darstellen, können ein Sperrbereich **V1,V2** und davor eventuell ein Warnbereich **W1,W2** eingerichtet sein.

Die Koordinaten von Sperrbereich **V1,V2** und Warnbereich **W1,W2** in den drei Raumachsen **x,y,z** mit **xV1,yV1,zV1** bis **xV1',yV1',zV1'** beispielhaft für den ersten Sperrbereich **V1** und **xW1,yW1,zW1** bis **xW1',yW1',zW1'** beispielhaft für den ersten Warnbereich **W1** sind in der Rechnereinheit **5** abgespeichert. In den Sperrbereich **V1,V2** darf mit den Arbeitshandschuhen **1,2** nicht eingegriffen werden, während in den Warnbereich **W1,W2** mit den Arbeitshandschuhen **1,2** nicht eingegriffen werden sollte. Gleiches gilt für ein Objekt **7,** mit dem auch nicht in den Sperrbereich **V1,V2** vorgedrungen werden darf, während das für den Warnbereich **W1,W2** nicht geschehen sollte. In der Rechnereinheit **5** erfolgt ein Echtzeitvergleich mit den in der Rechnereinheit **5** festgelegten Sperrbereichen **V1,V2** und eventuellen Warnbereichen **W1,W2.**

Mit dem Tracking-System **C1-C3** lässt sich auch feststellen und protokollieren, wenn zwar nicht direkt in einen Sperrbereich **V1** eingegriffen wird, jedoch über einem Sperrbereich **V1** durch einen darüber einragenden Arbeitshandschuh **1** die Laminarströmung möglicherweise in kritischem Ausmass gestört wird.

Die Virtual-Reality-Brille **80,** welche der Bediener **8** trägt, ist insbesondere dazu bestimmt, dem Bediener **8** die in der Rechnereinheit **5** definierten Sperrbereiche **V1,V2** und eventuellen Warnbereiche **W1,W2** als Grafikelemente anzuzeigen.

Die zur Anordnung gehörige Signaleinheit **6** hat den Zweck, einen in die Arbeitskammer **91** eingreifenden Bediener **8** und/oder eine Überwachungsperson **8'** bei unzulässigem Vordringen in einen Sperrbereich **V1,V2** akustisch und/oder optisch und/oder durch auf den Körper des Bedieners **8** und/oder der Überwachungsperson **8'** einwirkende Vibration zu alarmieren.

Sind Warnbereiche **W1,W2** eingerichtet, dient die Signaleinheit **6** dazu, das kritische Vordringen in einen Warnbereich **W1,W2** als Annäherung an einen Sperrbereich **V1,V2** akustisch und/oder optisch und/oder durch auf den Körper des Bedieners **8** und/oder der Überwachungsperson **8'** einwirkende Vibration zu melden.

## Patentansprüche

1. Verfahren zur Überwachung von Zustand und Bewegungsablauf in einer aseptischen Arbeitskammer (**91**) eines in einem Aufstellraum (**99**) stehenden Containments (**9**), mit zumindest einem in die Arbeitskammer (**91**) hineinragenden Arbeitshandschuh (**1,2**), den ein Bediener (**8**) trägt, wobei:
a) der jeweilige Arbeitshandschuh (**1,2**) in der Arbeitskammer (**91**) bis zu einem maximalen Greifbereich **(R1,R2)** in den drei Raumachsen (**x,y,z**) erstreckbar ist; und
b) ein Tracking-System **(C1-C3)** installiert ist, deren Aufzeichnungen zur kontinuierlichen dreidimensionalen Lokalisierung des zumindest einen Arbeitshandschuhs (**1,2**) dienen und in einer Rechnereinheit (**5**) abgespeichert werden, **gekennzeichnet durch** folgende Schritte:
c) Definition zumindest eines dreidimensionalen oder zweidimensionalen Sperrbereichs (**V1,V2**) in der Arbeitskammer (**91**);
d) zumindest einzelne Flächenabschnitte des Containments (**9**) werden als Sperrbereich (**V1,V2**) definiert;
e) um Maschinen herum, die in der Arbeitskammer (**91**) installiert sind und für den Bediener (**8**) eine Gefahr darstellen, wird ein Sperrbereich (**V1,V2**) eingerichtet;
f) die Koordinaten des zumindest einen Sperrbereichs (**V1,V2**) werden in der Rechnereinheit (**5**) abgespeichert; und
g) bei Vordringen mit dem zumindest einen Arbeitshandschuh (**1,2**) in den zu- mindest einen Sperrbereich **(V1,V2)** wird der Bediener (**8**) alarmiert.

2. Verfahren nach Anspruch 1, **dadurch gekennzeichnet, dass**
a) zu dem zumindest einen dreidimensionalen oder zweidimensionalen definierten Sperrbereich **(V1,V2)** ein daran angrenzender Warnbereich **(W1,W2)** definiert wird; wobei:
b) der zumindest eine Flächenabschnitt den gesamten Boden (**92**) des Containments (**9**) als Sperrbereich **(V1,V2)** umfasst;
c) herum um die in der Arbeitskammer (**91**) installierten und für den Bediener (**8**) eine Gefahr darstellenden Maschinen, vor dem Sperrbereich **(V1,V2),** ein Warnbereich **(W1,W2)** eingerichtet wird;
d) die Koordinaten von Sperrbereich **(V1,V2)** und Warnbereich **(W1,W2)** in der Rechnereinheit (**5**) abgespeichert werden; und
e) bei Vordringen mit dem zumindest einen Arbeitshandschuh (**1,2**) in den Warnbereich **(W1,W2)** der Bediener (**8**) alarmiert wird.

3. Verfahren nach den Ansprüchen 1 und 2, **dadurch gekennzeichnet, dass**
a) jeder Arbeitshandschuh (**1,2**) hält jeweils ein Objekt (**7**) oder zwei Arbeitshandschuhe (**1,2**) zusammen halten ein Objekt (**7**), wodurch sich ein maximal erweiterter Aktionsbereich **(R1',R2')** in den drei Raumachsen (**x,y,z**) ergibt;
b) vom Tracking-Systems **(C1-C3)** sowohl die kontinuierliche dreidimensionale Lokalisierung des zumindest einen Arbeitshandschuhs (**1,2**) als auch des zumindest einen Objekts (**7**) aufgezeichnet werden; und
c) beim Vordringen eines Objekts (**7**) in den Warnbereich **(W1,W2)** oder den Sperrbereich **(V1,V2)** der Bediener (**8**) alarmiert wird.

4. Verfahren nach den Ansprüchen 1 bis 3, **dadurch gekennzeichnet, dass**
a) in der Rechnereinheit (**5**) die räumlichen momentanen Positionen von Arbeitshandschuhen (**1,2**) und Objekten (**7**) innerhalb des mit den drei Raumachsen (**x,y,z**) gebildeten xyz-Koordinatensystems mit Zeitstempel erfasst werden; und
b) in der Rechnereinheit (**5**) ein Echtzeitvergleich mit den in der Rechnereinheit (**5**) festgelegten Sperrbereichen **(V1,V2)** und optionalen Warnbereichen **(W1,W2)** erfolgt.

5. Verfahren nach zumindest einem der Ansprüche 1 bis 4, **dadurch gekennzeichnet, dass**
a) sich in der Arbeitskammer (**91**) temporär Behältnisse (**4**) befinden, die mit Substanzen gefüllt sind, mit solchen zu befüllen oder zu entleeren sind; wobei
b) in der Rechnereinheit (**5**) die räumlichen Positionen der Behältnisse (**4**) innerhalb des mit den drei Raumachsen (**x,y,z**) gebildeten xyz-Koordinatensystems mit Zeitstempel erfasst werden, um bei einem Havariefall eine nichtplanmässige Position eines Behältnisses (**4**), einen eventuellen Bruch eines Behältnisses (**4**) mit dessen Ausbreitungsbereich und den Bereich unkontrolliert austretender Substanz festzustellen.

6. Verfahren nach zumindest einem der Ansprüche 1 bis 5, **dadurch gekennzeichnet, dass** der Bediener (**8**) mit einer Virtual-Reality-Brille (**80**) ausgestattet wird, welche dazu bestimmt ist:
a) ihm die in der Rechnereinheit (**5**) definierten Sperrbereiche **(V1,V2)** und optionalen Warnbereiche **(W1,W2)** als Grafikelemente anzuzeigen; und
b) ihm eine gemäss dem in der Rechnereinheit (**5**) hinterlegten Reinigungs- und Desinfektionsprogramm zu reinigende Fläche anzuzeigen.

7. Verfahren nach zumindest einem der Ansprüche 1 bis 6, **dadurch gekennzeichnet, dass** das Tracking-System **(C1-C3)** zumindest umfasst:
a) eine erste Kamera (**C1**), die einen ersten Erfassungswinkel (**α1**) hat; und
b) eine zweite Kamera (**C2**), die einen zweiten Erfassungswinkel (**α2**) hat; wobei:
c) die erste Kamera (**C1**) mit ihrem ersten Erfassungswinkel (**α1**) zwei Raumachsen (**x,y**) und die zweite Kamera (**C2**) mit ihrem zweiten Erfassungswinkel (**α2**) die dritte Raumachse (**z**) überwachend erfassen;
d) sich der erste Erfassungswinkel (**α1**) und der zweite Erfassungswinkel (**α2**) überlappen, so dass alle Bereiche in der Arbeitskammer (**91**) von der Überwachung erfasst werden; und
e) die erfassten Zustände und Bewegungsabläufe in der Rechnereinheit (**5**) als 3D-Daten und/oder Videostreams abgespeichert werden.

8. Verfahren nach Anspruch 7, **dadurch gekennzeichnet, dass** bei grosser räumlicher Ausdehnung der Arbeitskammer (**91**) eine dritte Kamera (**C3**) mit ihrem dritten Erfassungswinkel (**α3**) und in Abhängigkeit von der Grösse der Arbeitskammer (**91**) weitere Kameras (**C**) mit den jeweiligen Erfassungswinkeln (**α**) installiert werden; wobei:
a) die erste Kamera (**C1**) mit ihrem ersten Erfassungswinkel (**α1**) die erste Raumachse (**x**), die zweite Kamera (**C2**) mit ihrem zweiten Erfassungswinkel (**α2**) die zweite Raumachse (**y**) und die dritte Kamera (**C3**) mit ihrem dritten Erfassungswinkel (**α3**) die dritte Raumachse (**z**) überwachend erfassen;
b) sich die Erfassungswinkel **(α1-α3)** so überlappen, dass alle Bereiche in der Arbeitskammer (**91**) von der Überwachung erfasst werden; und
c) die erfassten Zustände und Bewegungsabläufe in der Rechnereinheit (**5**) als 3D-Daten und/oder Videostreams abgespeichert werden.

9. Verfahren nach zumindest einem der Ansprüche 2 bis 8, **dadurch gekennzeichnet, dass** eine Signaleinheit (**6**) vorgesehen wird, welche einen in die Arbeitskammer (**91**) eingreifenden Bediener (**8**) und/oder eine Überwachungsperson (**8'**):
a) bei unzulässigem Vordringen in einen Sperrbereich **(V1,V2)** akustisch und/oder optisch und/oder durch auf den Körper des Bedieners (**8**) und/oder der Überwachungsperson (**8'**) einwirkende Vibration alarmiert; sowie
b) bei eingerichteten Warnbereichen **(W1,W2)** bei kritischem Vordringen in einen Warnbereich **(W1,W2)** als Annäherung an einen Sperrbereich **(V1,V2)** akustisch und/oder optisch und/oder durch auf den Körper des Bedieners (**8**) und/oder der Überwachungsperson (**8'**) einwirkende Vibration alarmiert.

10. Verfahren nach zumindest einem der Ansprüche 1 bis 9, **dadurch gekennzeichnet, dass** in der Rechnereinheit (**5**) weitere Vorschriften definiert werden, nämlich:
a) zum Eingriff in die Arbeitskammer (**91**) autorisierte Bediener (**8**);
b) in der Arbeitskammer (**91**) erlaubte Objekte (**7**), z.B. Werkzeuge, und erlaubte, passfähige Bauteile, z.B. Formteile an Füllmaschinen, und der vorschriftsgemässe Einbau solcher Formteile hinsichtlich anlagen-technischer Zuordnung und Positionierung;
c) maximal zulässige Geschwindigkeit der in der Arbeitskammer (**91**) bewegten Arbeitshandschuhe (**1,2**) bzw. Objekte (**7**); und
d) ein Reinigungs- und Desinfektionsprogramm.

11. Verfahren nach Anspruch 10, **dadurch gekennzeichnet, dass** das Tracking-System **(C1-C3)** zusätzlich zwecks Erkennung der biometrischen Kennzeichen eines am Containment (**9**) sich positionierten Bedieners (**8**) ausgestattet wird.

12. Verfahren nach Anspruch 6, **dadurch gekennzeichnet, dass** von der Virtual-Reality-Brille (**80**) dem Bediener (**8**) gemäss dem in der Rechnereinheit (**5**) hinterlegten Reinigungs- und Desinfektionsprogramm die vorgeschriebene Intensität bei der Flächenreinigung, z.B. als ein- oder mehrmaliges mit einem Mindestanpressdruck auszuführendes Überwischen, und deren Erfüllung angezeigt wird, z.B. als Farbumschlag bei erreichter Erfüllung von Rot auf Grün.

13. Verfahren nach zumindest einem der Ansprüche 1 bis 12, **dadurch gekennzeichnet, dass**
a) der zumindest eine Arbeitshandschuh (**1,2**) mit systematisch verteilten Markierungspunkten (**P1-P9**) versehen wird; und
b) anhand genannter Markierungspunkte (**P1-P9**) der vom Arbeitshandschuh (**1,2**) gebildete Volumenkörper als CAD-Drahtmodell durch das Tracking-System (**C1-C3**) erfasst wird.

14. Verfahren nach zumindest einem der Ansprüche 3 bis 13, **dadurch gekennzeichnet, dass**
a) das vom zumindest einen Arbeitshandschuh (**1,2**) gehaltene Objekt (**7**) mit systematisch verteilten Markierungspunkten (**Pm-Pn)** versehen wird; und
b) anhand genannter Markierungspunkte (**Pm-Pn**) der vom Objekt (**7**) gebildete Volumenkörper als CAD-Drahtmodell durch das Tracking-System (**C1-C3**) erfasst wird.

## Claims

1. Process for monitoring a state and movement sequence in an aseptic work chamber (**91**) of a containment (**9**) located in an installation room (**99**), having at least one work glove (**1,2**) which projects into the work chamber (**91**) and is worn by an operator (**8**), wherein:
a) the respective work glove (**1,2**) can be extended in the work chamber (**91**) as far as a maximum gripping range (**R1**,**R2**) in the three spatial axes (**x,y,z**); and
b) a tracking system **(C1-C3)** is installed, the recordings of which are used for continuous three-dimensional localization of the at least one work glove (**1,2**) and are stored in a computer unit (**5**), **characterized by** the following steps:
c) definition of at least one three-dimensional or two-dimensional prohibited region (**V1**,**V2**) in the work chamber (**91**);
d) at least some individual surface sections of the containment (**9**) are defined as a prohibited region (**V1,V2**);
e) a prohibited region **(V1,V2)** is arranged set up around machines which are installed in the work chamber (**91**) and which represent a hazard for the operator (**8**);
f) the coordinates of the at least one prohibited region **(V1,V2)** are stored in the computer unit (**5**);
g) the operator (**8**) is warned when intervening with the at least one work glove (**1,2**) into the at least one prohibited region (**V1,V2**).

2. Process as claimed in claim 1, **characterized in that**
a) a warning region **(W1,W2)** is defined which is adjoined to the at least one prohibited region (**V1**,**V2**), wherein:
b) the at least one surface section comprises the entire bottom (**92**) of the containment (**9**) as a prohibited region (**V1,V2**);
c) around the machines which are installed in the work chamber (**91**) and which represent a hazard for the operator (**8**) a warning region (**W1**,**W2**) is arranged in front of prohibited region (**V1,V2**);
d) the coordinates of the prohibited region **(V1,V2)** and warning region **(W1,W2)** are stored in the computer unit (**5**); and
e) the operator (**8**) is warned when intervening with the at least one work glove (**1,2**) into the warning region (**W1,W2**).

3. Process as claimed in claims 1 and 2, **characterized in that**
a) each work glove (**1,2**) may respectively hold an object (**7**) or two work gloves (**1,2**) together may hold an object (**7**), so that there is a maximally extended action range (**R1'**,**R2'**) in the three spatial axes (**x,y,z**);
b) the recordings of the tracking system **(C1-C3)** are used for continuous three-dimensional localization both of the at least one work glove (**1,2**) and of the at least one object (**7**); and
c) the operator (**8**) is warned when an object (**7**) is intervening into the warning region (**W1**,**W2**) or the prohibited region (**V1,V2**).

4. Process as claimed in the claims 1 to 3, **characterized in that**
a) the spatial positions of work gloves (**1,2**) and objects (**7**) within the xyz coordinate system formed by the three spatial axes (**x,y,z**) are recorded with a timestamp in the computer unit (**5**); and
b) a real-time comparison with the prohibited regions **(V1,V2)** and optional warning regions (**W1**,**W2**) established in the computer unit (**5**) is carried out in the computer unit (**5**).

5. Process as claimed in at least one of claims 1 to 4, **characterized in that**
a) containers (**4**) which are filled with substances, are to be filled therewith or are to be emptied, are temporarily located in the work chamber (**91**); wherein
b) the spatial positions of the containers (**4**) within the xyz coordinate system formed by the three spatial axes (**x,y,z**) are recorded with a timestamp in the computer unit (**5**) in order, in the event of an accident, to establish an unplanned position of a container (**4**), possible breakage of a container (**4**) with its spreading region and the spreading region of uncontrolledly emerging substance.

6. Process as claimed in at least one of claims 1 to 5, **characterized in that** the operator (**8**) is equipped with virtual reality glasses (**80**), which are intended:
a) to display the prohibited regions (**V1**,**V2**) and optional warning regions (**W1**,**W2**) defined in the computer unit (**5**) to them as graphics elements; and
b) to display to them a surface to be cleaned according to the cleaning and disinfection program saved in the computer unit (**5**).

7. Process as claimed in at least one of claims 1 to 6, **characterized in that** the tracking system (**C1-C3**) comprises at least:
a) a first camera (**C1**), which has a first acquisition angle (**α1**); and
b) a second camera (**C2**), which has a second acquisition angle (**α2**); wherein:
c) the first camera (**C1**) with its first acquisition angle (**α1**) monitoringly records two spatial axes (**x,y**) and the second camera (**C2**) with its second acquisition angle (**α2**) monitoringly records the third spatial axis (**z**);
d) the first acquisition angle (**α1**) and the second acquisition angle (**α2**) overlap so that all regions in the work chamber (**91**) are recorded by the monitoring; and
e) the recorded states and movement sequences are stored as 3D data and/or video streams in the computer unit (**5**).

8. Process as claimed in claim 7, **characterized in that** in the case of a large spatial extent of the work chamber (**91**), a third camera (**C3**) with its third acquisition angle (**α3**) and, depending on the size of work chamber (**91**), further cameras (**C**) with the respective acquisition angles (**α**) are installed; wherein:
a) the first camera (**C1**) with its first acquisition angle (**α1**) monitoringly records the first spatial axis (**x**), the second camera (**C2**) with its second acquisition angle (**α2**) monitoringly records the second spatial axis (**y**) and the third camera (**C3**) with its third acquisition angle (**α3**) monitoringly records the third spatial axis (**z**);
b) the acquisition angles (**α1-α3**) overlap in such a way that all regions in the work chamber (**91**) are recorded by the monitoring; and
c) the recorded states and movement sequences are stored as 3D data and/or video streams in the computer unit (**5**).

9. The arrangement as claimed in at least one of claims 2 to 8, **characterized in that** a signal unit (**6**) is provided, which for an operator (**8**) intervening in the work chamber (**91**) and/or a monitoring person (**8**'):
a) in the event of unallowed penetration into a prohibited region (**V1,V2**), alerts them acoustically and/or optically and/or by a vibration acting on the body of the operator (**8)** and/or of the monitoring person (**8'**); and
b) if warning regions (**W1**,**W2**) are set up, in the event of critical penetration into a warning region (**W1**,**W2**) as an approach to a prohibited region (**V1,V2**), informs them acoustically and/or optically and/or by a vibration acting on the body of the operator (**8**) and/or of the monitoring person (**8'**).

10. Process as claimed in at least one of claims 1 to 9, **characterized in that** further rules are defined in the computer unit (**5**), namely:
a) operators (**8**) authorized to intervene in the work chamber (**91**);
b) objects (**7**), for example tools, allowed in the work chamber (**91**) and allowed fittable components, for example shaped parts for filling machines, and the specification-compliant installing of such shaped parts in respect of plant-technological allocation and positioning;
c) maximum allowed speed of the work gloves (**1,2**) or objects (**7**) moved in the work chamber (**91**); and
d) a cleaning and disinfection program.

11. Process as claimed in claim 10, **characterized in that** the tracking system (**C1**-**C3**) is additionally configured to detect the biometric features of an operator (**8**) positioned at the containment (**9**).

12. Process as claimed in claim 6, **characterized in that** the virtual reality glasses (**80**) display to the operator (**8**), according to the cleaning and disinfection program saved in the computer unit (**5**), the prescribed intensity for the surface cleaning, for example as single or multiple wiping to be carried out with a minimum application pressure, and the fulfillment thereof, for example as a color change from red to green when reaching fulfillment.

13. The arrangement as claimed in at least one of claims 1 to 12, **characterized in that**
a) the at least one work glove (**1,2**) is provided with systematically distributed marking points (**P1-P9**); and
b) with the aid of said marking points (**P1-P9**), the volume body formed by the work glove (**1,2**) can be recorded as a CAD wire model by the tracking system (**C1-C3**).

14. The arrangement as claimed in at least one of claims 3 to 13, **characterized in that**
a) the object (**7**) held by the at least one work glove (**1,2**) is provided with systematically distributed marking points (**Pm-Pn**); and
b) with the aid of said marking points (**Pm-Pn**) the volume body formed by the object (**7**) can be recorded as a CAD wire model by the tracking system (**C1-C3**).

## Revendications

1. Procédé permettant de surveiller l'état et la séquence de mouvements dans une chambre de travail aseptique (**91**) d'une enceinte de confinement (**9**) placée dans un local d'installation (**99**), comprenant au moins un gant de travail (**1,2**) faisant saillie dans la chambre de travail (**91**) et que porte un opérateur (**8**), dans lequel:
a) le gant de travail (**1,2**) respectif peut s'étendre dans la chambre de travail (**91**) jusqu'à une zone de préhension (**R1**,**R2**) maximale dans les trois axes spatiaux (**x,y,z**); et
b) un système de poursuite (**C1** à **C3**) est installé dont les enregistrements servent à la localisation tridimensionnelle continue dudit au moins un gant de travail (**1,2**) et sont sauvegardés dans une unité de calcul (**5**), **caractérisé par** les étapes suivantes consistant à:
c) définir au moins une zone réservée **(V1,V2)** tridimensionnelle ou bidimensionnelle dans la chambre de travail (**91**);
d) au moins des parties de surface individuelles de l'enceinte de confinement (**9**) sont définies en tant que zone réservée (**V1**,**V2**);
e) une zone réservée **(V1,V2)** est aménagée autour de machines qui sont installées dans la chambre de travail (**91**) et représentent un danger pour l'opérateur (**8**);
f) les coordonnées de ladite au moins une zone réservée **(V1,V2)** sont sauvegardées dans l'unité de calcul (**5**); et
g) l'opérateur (**8**) est alerté en cas de pénétration avec ledit au moins un gant de travail (**1,2**) dans ladite au moins une zone réservée (**V1**,**V2**).

2. Procédé selon la revendication 1, **caractérisé en ce que**
a) pour ladite au moins une zone réservée **(V1,V2)** tridimensionnelle ou bidimensionnelle définie, une zone d'avertissement **(W1,W2)** adjacente à celle-ci est définie; dans lequel:
b) ladite au moins une partie de surface comprend le sol (**92**) tout entier de l'enceinte de confinement (**9**) en tant que zone réservée (**V1**,**V2**);
c) une zone d'avertissement **(W1,W2)** est aménagée devant la zone réservée **(V1,V2)** autour des machines installées dans la chambre de travail (**91**) et représentant un danger pour l'opérateur (**8**);
d) les coordonnées de la zone réservée **(V1,V2)** et de la zone d'avertissement **(W1,W2)** sont sauvegardées dans l'unité de calcul (**5**); et
e) l'opérateur (**8**) est alerté en cas de pénétration avec ledit au moins un gant de travail (**1,2**) dans la zone d'avertissement (**W1**,**W2**).

3. Procédé selon les revendications 1 et 2, **caractérisé en ce que**
a) chaque gant de travail (**1,2**) maintient respectivement un objet (**7**) ou deux gants de travail (**1,2**) maintiennent ensemble un objet (**7**) de sorte qu'il en résulte une zone d'action (**R1'**,**R2'**) étendue au maximum dans les trois axes spatiaux (**x,y,z**);
b) le système de poursuite (**C1 à C3**) enregistre à la fois la localisation tridimensionnelle continue dudit au moins un gant de travail (**1,2**) et dudit au moins un objet (**7**); et
c) l'opérateur (**8**) est alerté en cas de pénétration d'un objet (**7**) dans la zone d'avertissement **(W1,W2)** ou la zone réservée (**V1**,**V2**).

4. Procédé selon les revendications 1 à 3, **caractérisé en ce que**
a) dans l'unité de calcul (**5**), les positions instantanées spatiales de gants de travail (**1,2**) et d'objets (**7**) à l'intérieur du système de coordonnées xyz formé par les trois axes spatiaux (**x,y,z**) sont détectées avec un horodatage; et
b) dans l'unité de calcul (**5**), une comparaison en temps réel avec les zones réservées **(V1,V2)** fixées dans l'unité de calcul (**5**) et les zones d'avertissement **(W1,W2)** en option est effectuée.

5. Procédé selon au moins l'une des revendications 1 à 4, **caractérisé en ce que**
a) des récipients (**4**) se trouvent temporairement dans la chambre de travail (**91**), qui sont remplis de substances, sont à remplir avec celles-ci ou sont à vider; dans lequel
b) dans l'unité de calcul (**5**), les positions spatiales des récipients (**4**) à l'intérieur du système de coordonnées xyz formé par les trois axes spatiaux (**x,y,z**) sont détectées avec un horodatage afin de constater en cas d'avarie une position non planifiée d'un récipient (**4**), une possible rupture d'un récipient (**4**) avec la zone de propagation de celui-ci et la zone d'une substance sortant de manière incontrôlée.

6. Procédé selon au moins l'une des revendications 1 à 5, **caractérisé en ce que** l'opérateur (**8**) est équipé de lunettes de réalité virtuelle (**80**) qui sont destinées à:
a) lui afficher sous forme d'éléments graphiques les zones réservées (**V1**,**V2**) définies dans l'unité de calcul (**5**) et les zones d'avertissement **(W1,W2)** en option; et
b) lui afficher une surface à nettoyer selon un programme de nettoyage et de désinfection sauvegardé dans l'unité de calcul (**5**).

7. Procédé selon au moins l'une des revendications 1 à 6, **caractérisé en ce que** le système de poursuite (**C1** à **C3**) comprend au moins:
a) une première caméra (**C1**) qui présente un premier angle de détection (**α1**)**;** et
b) une deuxième caméra (**C2**) qui présente un deuxième angle de détection (**α2**); dans lequel:
c) la première caméra (**C1**) avec son premier angle de détection (**α1**) détecte deux axes spatiaux (**x,y**), et la deuxième caméra (**C2**) avec son deuxième angle de détection (**α2**) détecte le troisième axe spatial (**z**), en les surveillant;
d) le premier angle de détection (**α1**) et le deuxième angle de détection (**α2**) se chevauchent de telle sorte que toutes les zones dans la chambre de travail (**91**) sont détectées par la surveillance; et
e) les états et séquences de mouvements détectés sont sauvegardés dans l'unité de calcul (**5**) sous forme de données 3D et/ou de flux vidéo.

8. Procédé selon la revendication 7, **caractérisé en ce que** dans le cas d'une grande étendue spatiale de la chambre de travail (**91**), une troisième caméra (**C3**) avec son troisième angle de détection (**α3**), et en fonction de la dimension de la chambre de travail (**91**) d'autres caméras (**C**) avec les angles de détection (**α**) respectifs sont installées; dans lequel:
a) la première caméra (**C1**) avec son premier angle de détection (**α1**) détecte le premier axe spatial (**x**), la deuxième caméra (**C2**) avec son deuxième angle de détection (**α2**) détecte le deuxième axe spatial (y) et la troisième caméra (**C3**) avec son troisième angle de détection (**α3**) détecte le troisième axe spatial (**z**) en les surveillant;
b) les angles de détection (**α1** à **a3**) se chevauchent de telle sorte que toutes les zones dans la chambre de travail (**91**) sont détectées par la surveillance; et
c) les états et séquences de mouvements détectés sont sauvegardés dans l'unité de calcul (**5**) sous forme de données 3D et/ou de flux vidéo.

9. Procédé selon au moins l'une des revendications 2 à 8, **caractérisé en ce qu'**une unité de signalisation (**6**) est prévue qui alerte un opérateur (**8**) et/ou un surveillant (**8'**) intervenant dans la chambre de travail (**91**):
a) en cas de pénétration inadmissible dans une zone réservée (**V1,V2**), de manière acoustique et/ou optique et/ou par une vibration agissant sur le corps de l'opérateur (**8**) et/ou du surveillant (**8'**); et
b) lorsque des zones d'avertissement (**W1**,**W2**) sont aménagées, en cas de pénétration critique dans une zone d'avertissement (**W1**,**W2**) comme une approche d'une zone réservée (**V1,V2**), de manière acoustique et/ou optique et/ou par une vibration agissant sur le corps de l'opérateur (**8**) et/ou du surveillant (**8'**).

10. Procédé selon au moins l'une des revendications 1 à 9, **caractérisé en ce que** d'autres dispositions sont définies dans l'unité de calcul (**5**), à savoir:
a) des opérateurs (**8**) autorisés à intervenir dans la chambre de travail (**91**);
b) des objets (**7**) admis dans la chambre de travail (**91**), par exemple des outils, et des composants adaptables admis, par exemple des pièces moulées sur des machines de remplissage, et l'installation conforme de ces pièces moulées en ce qui concerne l'attribution et le positionnement dans l'installation technique;
c) la vitesse admissible maximale des gants de travail (**1,2**) ou objets (**7**) déplacés dans la chambre de travail (**91**); et
d) un programme de nettoyage et de désinfection.

11. Procédé selon la revendication 10, **caractérisé en ce que** le système de poursuite (**C1** à **C3**) est en outre équipé en vue d'une reconnaissance des repères biométriques d'un opérateur (**8**) positionné au niveau de l'enceinte de confinement (**9**).

12. Procédé selon la revendication 6, **caractérisé en ce que** les lunettes de réalité virtuelle (**80**) affichent pour l'opérateur (**8**) selon le programme de nettoyage et de désinfection sauvegardé dans l'unité de calcul (**5**) l'intensité spécifiée lors du nettoyage de surface, par exemple comme un essuyage unique ou multiple à effectuer à une pression de contact minimale ainsi que l'exécution de celui-ci, par exemple sous la forme d'un changement de couleur du rouge au vert lorsque l'exécution a été réalisée.

13. Procédé selon au moins l'une des revendications 1 à 12, **caractérisé en ce que**
a) ledit au moins un gant de travail (**1,2**) est muni de points de repère (**P1 à P9**) répartis systématiquement; et
b) à l'aide desdits points de repère (**P1 à P9**), le corps volumique formé par le gant de travail (**1,2**) est détecté sous forme de modèle filaire de CAO par le système de poursuite (**C1** à **C3**).

14. Procédé selon au moins l'une des revendications 3 à 13, **caractérisé en ce que**
a) l'objet (**7**) maintenu par ledit au moins un gant de travail (**1,2**) est muni de points de repère (**Pm** à **Pn**) répartis systématiquement; et
b) à l'aide desdits points de repère (**Pm** à **Pn**), le corps volumique formé par l'objet (**7**) est détecté sous forme de modèle filaire de CAO par le système de poursuite (**C1** à **C3**).
